# DEMANDE DE BREVET EUROPEEN

(11) **EP 1 126 750 A1**
(43) Date de publication de la demande: **22.08.2001**
(21) Numéro de dépôt: 01400179.6
(22) Date de dépôt: 22.01.2001
(51) Int. Cl.: H05H 1/34, B23K 10/00

(54) **Procédé et installation de travail à l'arc plasma avec mélange gazeux à base d'hydrogène, d'azote et/ou d'argon**

(30) Priorité: 18.02.2000 FR 0002026
(71) Demandeur: L'AIR LIQUIDE, SOCIETE ANONYME POUR L'ETUDE ET L'EXPLOITATION DES PROCEDES GEORGES CLAUDE, 75007 Paris (FR); LA SOUDURE AUTOGENE FRANCAISE, F-75007 Paris (FR)
(72) Inventeur: Augeraud, Régis, 95300 Pontoise (FR); Borne, André, 95550 Bessancourt (FR); Delzenne, Michel, 95130 Franconville (FR)
(74) Mandataire: Pittis, Olivier

(57) **Abrégé**

Procédé et installation de travail à l'arc, en particulier de coupage plasma, d'une pièce de travail, dans lequel on alimente une torche à plasma avec un courant électrique et avec un mélange gazeux contenant de l'hydrogène et de l'azote et/ou de l'argon, on délivre, au moyen de la torche à plasma, un jet de plasma obtenu par ionisation du mélange gazeux par le courant électrique. La proportion d'hydrogène dans le mélange gazeux contenant de l'hydrogène et de l'azote et/ou de l'argon est inférieure à 50%. Le mélange gazeux est obtenu par addition d'une quantité déterminée d'hydrogène dans de l'azote et/ou de l'argon, immédiatement avant introduction du mélange gazeux dans ladite torche. La quantité déterminée d'hydrogène est déterminée en fonction de l'épaisseur de la pièce de travail, la nuance du matériau constitutif de la pièce de travail, de la vitesse de travail souhaitée et/ou de l'intensité du courant électrique.

## Description

La présente invention concerne un procédé de travail à l'arc plasma utilisant une torche à plasma alimentée en un mélange de gaz contenant de l'hydrogène et de l'azote et/ou de l'argon, la quantité d'hydrogène du mélange étant déterminée en fonction d'un ou plusieurs paramètres choisis parmi l'épaisseur et/ou la nuance du matériau constitutif de la pièce de travail, de la vitesse de travail souhaitée et de l'intensité du courant électrique.

Une torche à plasma d'arc utilisable dans une opération de coupage, de soudage, de marquage, de projection ou dans toute autre opération de traitement thermique d'un matériau métallique ou non métallique comprend habituellement une électrode en cuivre ou en alliage de cuivre portant un insert cylindrique généralement en hafnium, en tungstène ou en zirconium, sur lequel vient prendre racine l'arc électrique servant à ioniser le gaz alimentant la torche, c'est-à-dire le débit déterminé de gaz sous pression, dit gaz plasmagène, qui est distribué entre l'électrode et la tuyère et qui s'écoule par un orifice de ladite tuyère en direction de la pièce de travail.

L'électrode est généralement centrée au-dessus de cet orifice d'éjection du jet plasma aménagé axialement dans la tuyère et qui forme diaphragme de constriction.

Dans le cas particulier d'une opération de coupage plasma, le dispositif ou système de coupage plasma comprend habituellement une torche à plasma, une source de courant électrique, un système d'allumage d'arc électrique et une ou plusieurs sources de fluides, en particulier de gaz plasmagène, éventuellement de gaz de protection ou de fluide post-injecté, et de fluide de refroidissement de la torche, en général de l'eau distillée.

De telles torches ou installations sont bien connues de l'homme du métier car ayant déjà été décrites dans de nombreux documents auxquels on pourra se reporter pour plus de détails, notamment EP-A-599709, EP-A-872300, EP-A-801882, EP-A-941018, EP-A-144267, EP-A-410875, EP-A-772957, EP-A-902606, EP-A-810052, EP-A-845929, EP-A-790756, EP-A-196612, WO-A-89/11941, US-A-4,521,666, US-A-4,059,743, US-A-4,163,891 et US-A-5,591,357.

De façon connue, le coupage à l'arc plasma exploite les effets thermiques et cinétiques d'un jet plasma pour fondre le matériau à découper et expulser le matériau fondu hors de la saignée formée consécutivement à un déplacement relatif de la torche par rapport à la pièce de travail.

Par ailleurs, il est aussi connu qu'en découpe plasma, le gaz ou le mélange de gaz plasmagène utilisé n'est pas le même suivant la nature du matériau à couper.

Ainsi, un gaz non oxydant, par exemple de l'azote, est généralement utilisé pour les aciers inoxydables ou les alliages légers, alors qu'on préfère utiliser un gaz oxydant, tel l'oxygène ou l'air, pour couper les aciers de construction.

A l'inverse, en ce qui concerne la découpe des aciers inoxydables ou les alliages légers, ce sont généralement des mélanges gazeux d'argon et d'hydrogène qui sont utilisés, voire parfois des mélanges gazeux d'azote et d'hydrogène.

En effet, il est connu que l'utilisation, dans certains cas, d'un mélange binaire d'argon et d'hydrogène, en tant que gaz plasmagène, dans des proportions allant de 20 à 35% d'hydrogène permet de diminuer la dépouille et de conserver une face de coupe non oxydée pour les fortes épaisseurs.

D'autre part, les mélanges ternaires d'argon, d'azote et hydrogène peuvent être utilisés pour couper des faibles épaisseurs.

Toutefois, ces mélanges gazeux d'hydrogène et d'argon et/ou d'azote sont habituellement pré-mélangés, c'est-à-dire fabriqués selon les teneurs choisies, avant d'être conditionnés dans des récipients adéquats, telles des bouteilles de gaz, et qui sont ensuite acheminées sur le site d'opération, c'est-à-dire là où doit être réalisé le coupage.

Or, le fait que ces types de mélanges gazeux doivent être pré-mélangés et conditionnés en bouteilles de gaz pose un problème.

En effet, on comprend que, lorsqu'un tel mélange gazeux doit être utilisé avec des teneurs en hydrogène dans l'azote et/ou l'argon différentes pour répondre à plusieurs applications ou situations de coupage différentes, il est nécessaire de stoker autant de lots de bouteilles que de teneurs désirées, c'est-à-dire que de mélanges hydrogène/azote/argon ayant des teneurs différentes en hydrogène.

Cela nécessite donc de disposer d'un parc important de bouteilles de gaz de compositions différentes et adaptées aux différentes situations susceptibles de se présenter et nécessite, de plus, de nombreux mouvements et manipulations de bouteilles.

Dans ces conditions, il est impératif de mettre en place des procédures strictes de stockage et de manutention de chaque bouteille, ainsi qu'un suivi précis des stocks pour éviter toute pénurie en un mélange gazeux particulier, ce qui est lourd à gérer et implique une immobilisation financière et des frais de fonctionnement relativement importants.

Le but de la présente invention est donc de résoudre ces problèmes de stockage et de mouvement de bouteilles tout en facilitant l'utilisation de mélanges gazeux de teneurs différentes en hydrogène.

En d'autres termes, la présente invention vise à proposer un procédé de travail à l'arc plasma utilisant des mélanges gazeux de teneurs variables en hydrogène compatibles avec différentes situations de travail à l'arc, en particulier différentes situations de coupage de matériaux, tout en conservant ou améliorant les performances de coupe en termes de vitesse, de bavures et/ou de rugosité des faces de coupe.

La présente invention concerne alors un procédé de travail à l'arc plasma d'au moins une pièce de travail, dans lequel :
(a) on alimente une torche à plasma avec un courant électrique et avec un mélange gazeux contenant de l'hydrogène et au moins un composé choisi parmi l'azote et l'argon,
(b) on délivre, au moyen de ladite torche à plasma, un jet de plasma obtenu par ionisation d'au moins une partie dudit mélange gazeux contenant de l'hydrogène et au moins un composé choisi parmi l'azote et l'argon par ledit courant électrique,
caractérisé :
- en ce que la proportion d'hydrogène dans le mélange gazeux contenant de l'hydrogène et au moins un composé choisi parmi l'azote et l'argon est supérieure à 0% en volume et inférieure à 50% en volume,
- en ce que ledit mélange gazeux est obtenu par addition d'une quantité déterminée d'hydrogène dans un gaz contenant au moins un composé choisi parmi l'azote et l'argon, ladite addition d'hydrogène étant opérée immédiatement avant introduction du mélange gazeux contenant de l'hydrogène et au moins un composé choisi parmi l'azote et l'argon dans ladite torche, et
- en ce que la quantité d'hydrogène est déterminée en fonction d'au moins un paramètre choisi parmi l'épaisseur de la pièce de travail, la nuance du matériau constitutif de la pièce de travail, de la vitesse de travail souhaitée et de l'intensité du courant électrique.

Selon le cas, le procédé de l'invention peut comprendre l'une ou plusieurs des caractéristiques suivantes :
- le procédé est un procédé de coupage plasma ou de marquage plasma, de préférence de coupage plasma.
- la proportion d'hydrogène dans le mélange gazeux contenant de l'hydrogène et au moins un composé choisi parmi l'azote et l'argon est comprise entre 10% en volume et 40% en volume, de préférence comprise entre 20% en volume et 35% en volume.
- le mélange gazeux contient de l'azote et de l'argon.
- l'addition d'hydrogène est réalisée dans au moins un mélangeur de gaz, de préférence ledit mélangeur de gaz comporte des moyens de réglage ou d'ajustage de la teneur en hydrogène.
- la quantité déterminée d'hydrogène est déterminée en fonction de l'épaisseur de la pièce de travail et d'au moins un paramètre choisi parmi la nuance du matériau constitutif de la pièce de travail, de la vitesse de travail souhaitée et de l'intensité du courant électrique.
- l'épaisseur de la pièce de travail est comprise entre 0.3 mm et 150 mm, de préférence entre 0.4 mm et 120 mm.
- la vitesse de travail souhaitée est comprise entre 0.4 m/min et 10 m/min, de préférence entre 0.5 m/min et 5 m/min.
- l'intensité du courant est comprise entre 10 A et 700 A, de préférence entre 15 et 600 A.
- la nuance du matériau constitutif de la pièce de travail est choisie parmi les aciers inoxydables, l'aluminium et les alliages légers, de préférence les aciers inoxydables 304L ou 316L, ou de l'aluminium A42. Un acier peut comprendre ou non (acier non allié), en plus du fer qui le constitue, d'autres éléments d'additions en proportions variables. Ainsi, si la teneur en éléments d'additions est inférieure à 5% en poids, l'acier est dit faiblement allié, alors que si la teneur en éléments d'additions est comprise entre 5% et 10% en poids, l'acier est dit fortement allié. Un acier inoxydable comprend, en plus du fer qui le constitue, plus de 10% de chrome et éventuellement d'autres éléments d'additions en proportions de 0% à 30%, tels que molybdène, nickel... Le principal élément constituant les alliages légers est l'aluminium additionné de 0 à 15% d'autres éléments, tels que silicium, manganèse, magnésium....
- le débit du gaz est inférieur ou égal à 200 I/min.
- la pression du gaz est comprise entre 1 et 10 bars.

L'invention porte aussi sur une installation de travail à l'arc plasma d'au moins une pièce de travail, en particulier susceptible de mettre en oeuvre un procédé ci-avant, caractérisée en ce qu'elle comporte :
- au moins une torche à plasma fixée sur un bâti-support et déplaçable selon au moins un axe de déplacement,
- au moins un générateur de courant relié à ladite torche,
- au moins une source d'hydrogène,
- au moins une source d'azote et/ou au moins une source d'argon,
- au moins un mélangeur de gaz alimenté en hydrogène par ladite au moins une source d'hydrogène et en azote et/ou en argon par au moins une source d'azote et/ou au moins une source d'argon, ledit mélangeur de gaz comportant des moyens de réglage ou d'ajustage de la proportion d'hydrogène additionnée à l'azote et/ou l'argon, de manière à obtenir un mélange gazeux contenant de l'hydrogène et de l'azote et/ou de l'argon en une proportion d'hydrogène dans ledit mélange gazeux supérieure à 0% en volume et inférieure à 50% en volume, la quantité d'hydrogène étant déterminée en fonction d'au moins un paramètre choisi parmi l'épaisseur de la pièce de travail, la nuance du matériau constitutif de la pièce de travail, de la vitesse de travail souhaitée et de l'intensité du courant électrique.

Selon le cas, l'installation de l'invention peut comprendre l'une ou plusieurs des caractéristiques suivantes :
- le mélangeur de gaz est agencé entre la source d'hydrogène et ladite source d'azote et/ou ladite source d'argon, et ladite torche (21).
- des moyens de réglages de débit et/ou de pression de mélange gazeux sont agencés entre la sortie du mélangeur et l'entrée de la torche.

La solution de l'invention permet de résoudre les problèmes de stockage et de mouvement de bouteilles tout en permettant l'utilisation d'un mélange gazeux, en particulier d'hydrogène et d'argon, dont la teneur ajustée afin d'optimiser les performances de coupes, en termes de vitesse, de bavures et de rugosité de la face de coupe.

Ainsi, à partir de gaz purs ou sensiblement purs, l'utilisation d'un moyen d'addition et de contrôle de la teneur en hydrogène dans l'azote et/ou l'argon a été développée sur une machine de découpe plasma afin de garantir la teneur de chaque constituant du mélange adapté à chaque utilisation.

Le contrôle de la teneur de chaque constituant selon le type d'application permet d'accroître les performances de découpes plasma selon des critères de productivité et/ou de qualité.

Selon le degré d'automatisation de l'installation, l'ajustement de la composition du mélange et des débits de gaz purs correspondant peuvent être effectués directement sur le mélangeur par action manuelle sur les organes de réglage, en se conformant par exemple à des instructions figurant dans un barème, ou encore de façon automatique par un directeur de commande qui règle et ajuste les différents paramètres liés au bon fonctionnement du procédé à partir de données d'entrées fournies par l'opérateur, telles que : nuance du matériau à couper, épaisseur dudit matériau, ainsi qu'éventuellement d'autres paramètres liés à la qualité et/ou à la productivité recherchées.

Le contrôle précis de la teneur de chaque constituant selon le type d'application permet d'accroître les performances de découpe plasma selon des critères de productivité et/ou de qualité.

Le réglage automatique de la teneur en hydrogène dans l'azote et/ou l'argon se fait grâce à une commande extérieure en fonction de plusieurs paramètres, tels que l'épaisseur de la tôle, l'intensité du courant, la nuance du matériau à couper et de la vitesse de coupe...

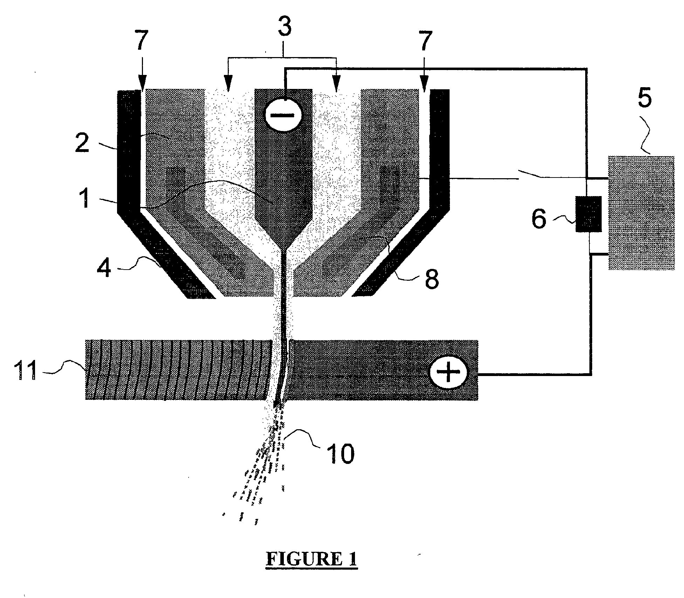

La figure 1 ci-annexée schématise le fonctionnement de la partie active d'une torche à plasma du type double flux représentée durant une opération de coupage d'une tôle 11.

La torche à plasma comprend une électrode 1 où vient prendre racine l'arc électrique servant à ioniser le gaz alimentant la torche, c'est-à-dire le débit déterminé de gaz plasmagène sous pression, qui est distribué et s'écoule dans la chambre plasmagène 3 située entre l'électrode 1 et la tuyère 2.

Le jet 10 de plasma est expulsé hors de la chambre plasmagène 3 par un orifice aménagé dans la tuyère 2 et en direction de la tôle 11 à couper.

L'électrode 1 est centrée au-dessus de l'orifice d'éjection du jet plasma aménagé axialement dans la tuyère 2 et qui forme diaphragme de constriction.

La torche à plasma est alimentée en courant électrique par une source de courant 5 électrique relié à un système d'allumage 6 d'arc électrique permettant de générer un arc pilote entre la tuyère 2 et l'électrode 1.

On voit aussi sur la figure 1 que la torche est du type double flux, c'est-à-dire qu'elle comporte une seconde tuyère 4 périphérique formant manchon autour de la tuyère 2 et q'un gaz de protection circule dans l'espace 7 inter-tuyères jusqu'à atteindre la zone de l'espace située entre l'extrémité de la tuyère 2 et la surface supérieure de la tôle 11.

La tuyère 2 est refroidie par un fluide de refroidissement, telle de l'eau distillée, circulant dans une chambre 8 de refroidissement.

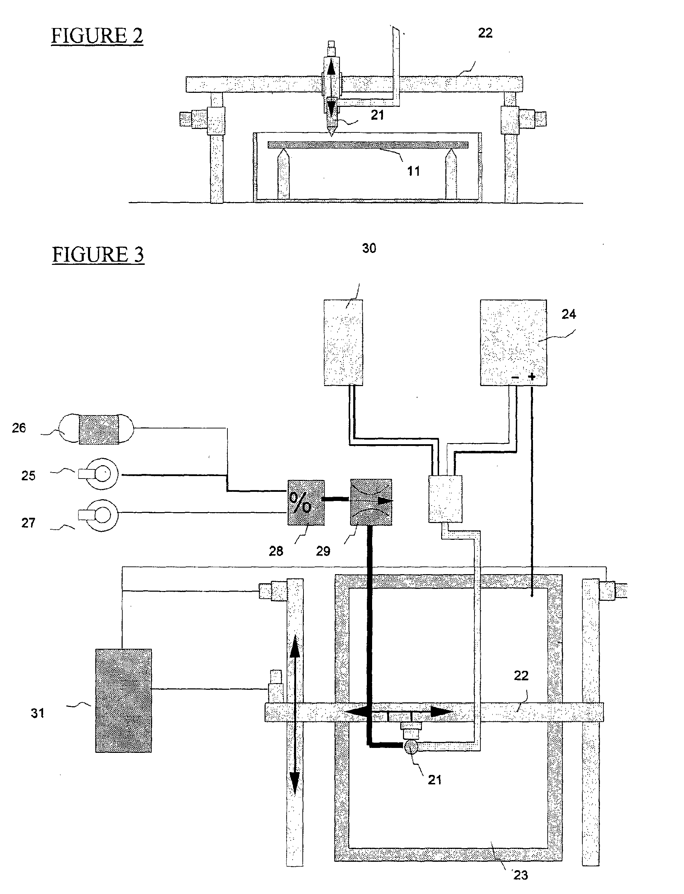

La figure 2 schématise, quant à elle, une installation de coupage plasma, vue de face, comportant schématiquement au moins une torche de coupage plasma 21, fonctionnant comme expliqué ci-dessus et illustré sur la figure 1, fixée à au moins un axe motorisé 22 de déplacement relatif de ladite torche 21 par rapport à la pièce de travail 11, c'est-à-dire la tôle à couper.

Comme visible sur la figure 3, qui est une vue de dessus de l'installation de la figure 2, la torche de coupage plasma 21 est reliée à un générateur 24 de courant;

L'installation comprend aussi des moyens de liaison, de distribution et d'échange d'informations entre ledit générateur 24 de courant, la torche 21 et ledit axe de déplacement.

Une source d'alimentation en argon 25, une source d'alimentation en azote 26, et une source d'alimentation en hydrogène 27 permettent d'alimenter la torche 21 en mélange gazeux de coupe plasmagène.

Entre lesdites sources de gaz 25, 26, 27 et la torche de coupage plasma, est disposé un mélangeur de gaz 28 recevant l'argon et/ou l'azote et l'hydrogène, et distribuant vers ladite torche 21, le mélange gazeux plasmagène dans les proportions de mélange requises, c'est-à-dire ayant une teneur en hydrogène contrôlée selon l'invention.

Le mélangeur 28 est doté de moyens de réglage de la teneur d'un gaz dans l'autre, en général de réglage ou d'ajustage de la teneur en hydrogène.

Des moyens supplémentaires de réglages de débit et/ou de pression 29, par exemple un détendeur ou un régulateur de débit massique, sont préférentiellement intercalés entre la sortie du mélangeur 28 et la torche 21.

Une telle installation peut comprendre en outre des moyens de refroidissement 30 de la torche 21, des moyens de gestion des cycles de travail et des moyens de programmations et de gestion 31 des mouvements dudit au moins un axe de déplacement.

La teneur d'un gaz dans l'autre est réglée de façon à optimiser les performances de la coupe en terme de productivité (accroissement de la vitesse de coupe) ou en terme de qualité (diminution des bavures, de la rugosité ou de la dépouille) des faces de coupe.

Ainsi, suivant la nuance de l'acier inoxydable ou de l'alliage léger ou, plus généralement, suivant l'épaisseur du matériau, il sera utilisé de l'argon et/ou de l'azote comportant une teneur contrôlée d'hydrogène comprise strictement entre 0 et 50%

Grâce à une telle une installation, la teneur d'un gaz dans l'autre, par exemple de hydrogène dans l'argon, est réglée de façon à optimiser les performances de la coupe en termes de productivité (accroissement de la vitesse de coupe) et/ou en terme de qualité (diminution des bavures, de la rugosité ou de la dépouille) des faces de coupe.

L'installation de la figure 3 a été utilisée pour vérifier l'efficacité du procédé selon la présente invention ; les essais effectués sont donnés dans les exemples ci-après.

### Exemple 1 : Mélange argon + hydrogène

Un mélange gazeux contenant de 20 à 35% d'hydrogène dans de l'argon utilisé en tant que gaz plasmagène a permis d'obtenir des faces de coupes lisses et non oxydées pour des épaisseurs supérieures à 6 mm d'acier inoxydable et pour des épaisseurs supérieures à 1 mm d'alliages légers, par ajustement de la teneur d'hydrogène en fonction de l'épaisseur et de la nuance de la pièce à couper, comme cela apparaît dans le tableau ci-après.

| Matériau | H₂ (%) | Ar (%) | Intensité (A) | Epaisseur (mm) | Vitesse en (m/min) | Nuance |
|---|---|---|---|---|---|---|
| Acier inoxydables | 10 à 40 | 90 à 60 | 15 à 600 | 0 à 100 | 0.5 à 5 | 304 L |
| Aluminium | 10 à 20 | 90 à 80 | 30 à 120 | 0 à 30 | 0.5 à 3 | A42 |
| Aluminium | 35 | 65 | 90 à 120 | 8 à 30 | 0.5 à 3 | A42 |

Avantageusement, il est aussi intéressant d'ajouter un gaz ou un mélange gazeux de protection, pris parmi l'argon, l'azote, l'hydrogène, les hydrocarbures ou leurs mélanges, distribué à la périphérie du jet plasma, c'est-à-dire d'utiliser préférentiellement une torche de type double flux, comme montré sur la figure 1.

### Exemple 2 : Mélange azote + hydrogène

Pour des épaisseurs inférieures à 6 mm des mêmes matériaux que ceux de l'exemple 1, un pourcentage de 5 à 35 % d'hydrogène dans de l'azote et ajusté en fonction de l'épaisseur et de la nuance, a permis également d'améliorer très sensiblement la qualité de coupe.

### Exemple 3: Mélange argon + azote + hydrogène

Un mélange ternaire formé d'azote, d'argon et d'hydrogène dont la teneur en hydrogène est ajustée de 2 à 8%, en fonction de l'épaisseur et de la nuance, tout en conservant un rapport de proportion entre argon et azote sensiblement constant tel que le rapport de la proportion en % en volume Ar/N₂ soit d'environ 3/16, permet également d'améliorer très sensiblement la qualité de coupe des mêmes matériaux d'épaisseurs inférieures à 8 mm.

Le procédé de découpe plasma selon l'invention, dans lequel un mélangeur permet de réaliser différents types de mélanges gazeux avec des teneurs contrôlées en hydrogène peut être utilisé par n'importe quel type d'installation de découpe plasma, qu'elle soit manuelle ou automatique, afin d'optimiser les performances de la découpe en terme de productivité et/ou de qualité suivant la nuance du matériau.

L'invention a été décrite ci-dessus en relation avec une torche de coupage plasma, mais il est bien entendu que l'application de cette invention n'est pas limitée aux seules torches de coupage et qu'elle concerne en tout ou partie les torches de marquage, de soudage, de projection et d'une façon générale toute torche de traitement thermique des matériaux métalliques ou non métalliques.

## Revendications

1. Procédé de travail à l'arc plasma d'au moins une pièce de travail, dans lequel :
(a) on alimente une torche à plasma avec un courant électrique et avec un mélange gazeux contenant de l'hydrogène et au moins un composé choisi parmi l'azote et l'argon,
(b) on délivre, au moyen de ladite torche à plasma, un jet de plasma obtenu par ionisation d'au moins une partie dudit mélange gazeux contenant de l'hydrogène et au moins un composé choisi parmi l'azote et l'argon par ledit courant électrique,
caractérisé :
- en ce que la proportion d'hydrogène dans le mélange gazeux contenant de l'hydrogène et au moins un composé choisi parmi l'azote et l'argon est supérieure à 0% en volume et inférieure à 50% en volume,
- en ce que ledit mélange gazeux est obtenu par addition d'une quantité déterminée d'hydrogène dans un gaz contenant au moins un composé choisi parmi l'azote et l'argon, ladite addition d'hydrogène étant opérée immédiatement avant introduction du mélange gazeux contenant de l'hydrogène et au moins un composé choisi parmi l'azote et l'argon dans ladite torche, et
- en ce que la quantité d'hydrogène est déterminée en fonction d'au moins un paramètre choisi parmi l'épaisseur de la pièce de travail, la nuance du matériau constitutif de la pièce de travail, de la vitesse de travail souhaitée et de l'intensité du courant électrique.

2. Procédé selon la revendication 1, caractérisé en ce que le procédé de travail à l'arc plasma est un procédé de coupage plasma ou de marquage plasma, de préférence de coupage plasma.

3. Procédé selon l'une des revendications 1 ou 2, caractérisé en ce que la proportion d'hydrogène dans le mélange gazeux contenant de l'hydrogène et au moins un composé choisi parmi l'azote et l'argon est comprise entre 10% en volume et 40% en volume, de préférence comprise entre 20% en volume et 35% en volume.

4. Procédé selon l'une des revendications 1 à 3, caractérisé en ce que le mélange gazeux contient de l'azote et de l'argon.

5. Procédé selon l'une des revendications 1 à 4, caractérisé en ce que l'addition d'hydrogène est réalisée dans au moins un mélangeur de gaz, de préférence ledit mélangeur de gaz comporte des moyens de réglage ou d'ajustage de la teneur en hydrogène.

6. Procédé selon l'une des revendications 1 à 5, caractérisé en ce que la quantité déterminée d'hydrogène est déterminée en fonction de l'épaisseur de la pièce de travail et d'au moins un paramètre choisi parmi la nuance du matériau constitutif de la pièce de travail, de la vitesse de travail souhaitée et de l'intensité du courant électrique.

7. Procédé selon l'une des revendications 1 à 6, caractérisé en ce que l'épaisseur de la pièce de travail est comprise entre 0.3 mm et 150 mm, la vitesse de travail souhaitée est comprise entre 0.4 m/min et 10 m/min, l'intensité du courant est comprise entre 10 A et 700 A, et/ou la nuance du matériau constitutif de la pièce de travail est choisie parmi les aciers inoxydables, l'aluminium et les alliages légers.

8. Installation de travail à l'arc plasma d'au moins une pièce de travail, en particulier susceptible de mettre en oeuvre un procédé selon l'une des revendications 1 à 7, caractérisée en ce qu'elle comporte
- au moins une torche (21) à plasma fixée sur un bâti-support et déplaçable selon au moins un axe de déplacement,
- au moins un générateur (24) de courant relié à ladite torche (21),
- au moins une source (27) d'hydrogène,
- au moins une source d'azote (26) et/ou au moins une source d'argon (25),
- au moins un mélangeur de gaz (28) alimenté en hydrogène par ladite au moins une source (27) d'hydrogène et en azote et/ou en argon par au moins une source d'azote (26) et/ou au moins une source d'argon (25), ledit mélangeur de gaz (28) comportant des moyens de réglage ou d'ajustage de la proportion d'hydrogène additionnée à l'azote et/ou l'argon, de manière à obtenir un mélange gazeux contenant de l'hydrogène et de l'azote et/ou de l'argon en une proportion d'hydrogène dans ledit mélange gazeux supérieure à 0% en volume et inférieure à 50% en volume, la quantité d'hydrogène étant déterminée en fonction d'au moins un paramètre choisi parmi l'épaisseur de la pièce de travail, la nuance du matériau constitutif de la pièce de travail, de la vitesse de travail souhaitée et de l'intensité du courant électrique.

9. Installation selon la revendication 8, caractérisée en ce que le mélangeur de gaz (28) est agencé entre la source (27) d'hydrogène et ladite source d'azote (26) et/ou ladite source d'argon (25), et ladite torche (21).

10. Installation selon l'une des revendications 8 ou 9, caractérisée en ce que des moyens de réglages de débit et/ou de pression (29) de mélange gazeux sont agencés entre la sortie du mélangeur (28) et l'entrée de la torche (21).
